(19) Europäisches Patentamt
European Patent Office
Office européen des brevets

(11) EP 4 502 015 A1

(12) **EUROPEAN PATENT APPLICATION**
published in accordance with Art. 153(4) EPC

(43) Date of publication:
**05.02.2025 Bulletin 2025/06**

(21) Application number: **23780942.1**

(22) Date of filing: **30.03.2023**

(51) International Patent Classification (IPC):
***C08G 81/02*** (2006.01) ***C08F 8/42*** (2006.01)
***C08K 3/04*** (2006.01) ***C08K 3/36*** (2006.01)
***C08L 15/00*** (2006.01)

(52) Cooperative Patent Classification (CPC):
**C08F 8/42; C08G 81/02; C08K 3/04; C08K 3/36; C08L 15/00**

(86) International application number:
**PCT/JP2023/013302**

(87) International publication number:
**WO 2023/190934 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022061322**

(71) Applicant: **Etic Inc.**
**Minato-ku, Tokyo 105-0001 (JP)**

(72) Inventors:
- **HATTORI, Iwakazu**
  **Tokyo 105-0001 (JP)**
- **ONO, Hisao**
  **Tokyo 105-0001 (JP)**
- **MIZUTANI, Motokazu**
  **Tokyo 105-0001 (JP)**

(74) Representative: **Meissner Bolte Partnerschaft mbB**
**Patentanwälte Rechtsanwälte**
**Postfach 86 06 24**
**81633 München (DE)**

# (54) DIENE RUBBER COMPOSITION AND METHOD FOR PRODUCING SAME

(57) The present invention addresses the problem of providing: a conjugated diene rubber composition which has excellent rebound resilience and wear resistance, while exhibiting good workability during rubber kneading and excellent wet grip performance; and a method for producing this conjugated diene rubber composition.

The present invention provides a diene rubber composition which is obtained by subjecting a mixture of a diene rubber component 1 that is obtained by terminally modifying a conjugated diene polymer 1 with at least one silicon compound that is represented by formula (1) and/or formula (2) and a diene rubber component 2 that is obtained by terminally modifying a conjugated diene polymer 2 with at least one silicon compound that is represented by formula (1) and/or formula (2) to a hydrolysis process, and subsequently drying the resulting product.

EP 4 502 015 A1

## Description

### TECHNICAL FIELD

The present invention relates to a diene rubber composition, a method for producing same, and a tire produced using the diene rubber composition.

### BACKGROUND ART

In a diene rubber composition used in low fuel consumption tires, improvements of rebound resilience, wear resistance, workability, and wet grip performance, etc. have been examined.

In Patent Documents 1 and 2, disclosed are compositions of high molecular weight conjugated diene rubber and low molecular weight conjugated diene rubber. These rubber compositions are mainly from molecular designs for motor racing tires.

In Patent Document 3, disclosed is a rubber composition, wherein a high molecular weight component and a low molecular weight component are separately produced by polymerizing styrene and butadiene using alkyl lithium as polymerization initiator followed by reacting a silane compound and the like having R-Si-S-R'-bonds, and then mixing them.

In Patent Document 4, disclosed is a method for producing a composition consisting of a high molecular weight component and a low molecular weight component, wherein styrene and butadiene are polymerized using alkyl lithium as polymerization initiator followed by generating high molecular weight component by coupling with a multifunctional silane compound with more modifying agent added per remaining unreacted molecule.

In Patent Documents 5 to 7, disclosed is a rubber composition consisting of a high molecular weight component with a molecular weight (Mw) of 350,000 g/mol or more and a low molecular weight component with a molecular weight (Mw) of less than 10,000, wherein styrene and butadiene are polymerized using alkyl lithium as an polymerization initiator followed by modifying with a siloxane compound, a silica compounded composition thereof and a mixed compounded composition of the silica and carbon black, .

Although the technologies described in the above documents satisfy the physical properties for the purposes in the respective documents, they do not simultaneously satisfy various physical properties such as rebound resilience and wear resistance, workability during rubber kneading and wet grip performance, etc.

### PRIOR ART DOCUMENT

### PATENT DOCUMENTS

Patent Document 1: JP B No. H5-74614
Patent Document 2: JP B No. 3290469
Patent Document 3: JP A No.2018-507303
Patent Document 4: WO No. 2018-56025
Patent Document 5: JP B No. 6864078
Patent Document 6: JP B No. 6823708
Patent Document 7: JP B No. 6799666

### DISCLOSURE OF THE INVENTION

### PROBLEM TO BE SOLVED BY THE INVENTION

In such circumstances, problem to be solved by the invention is to provide a conjugated diene rubber composition and a method for producing same, which has excellent rebound resilience and wear resistance, while exhibiting good workability during rubber kneading and excellent wet grip performance.

### MEANS FOR SOLVING PROBLEMS

In the course of diligent research to solve such problems, the inventors discovered a diene rubber component which exhibits good workability and has excellent rebound resilience, wear resistance and wet grip performance, and a method for producing same by combining a predetermined high molecular weight diene rubber component with a

predetermined low molecular weight diene rubber component, and then the invention has been completed as a result of further research.

That is, the present invention relates to the followings.

[1] A diene rubber composition which is obtained by subjecting a diene rubber component 1, that is obtained by terminally modifying a conjugated diene polymer 1 with at least one silicon compound that is represented by formula (1) and/or formula (2), and a diene rubber component 2, that is obtained by terminally modifying a conjugated diene polymer 2 with at least one silicon compound that is represented by formula (1) and/or formula (2), to a hydrolysis process, and subsequently drying the resulting product,

wherein the conjugated diene polymer 1 is obtained by polymerizing a conjugated diene compound and an aromatic vinyl compound, and has a peak molecular weight in terms of polystyrene of 400 k to 2,000 kg/mol, and wherein the conjugated diene polymer 2 is obtained by polymerizing a conjugated diene compound and an aromatic vinyl compound, and has a peak molecular weight in terms of polystyrene of 15 k to 60 kg/mol,

$$(X^1)_n(R^1O)_m\text{-Si-}(R^2)_{4-n-m} \qquad \text{Formula (1)}$$

wherein $R^1$ and $R^2$ are each independently an alkyl group, an aromatic group, or an allyl group which has 1 to 12 carbon atoms, or an alkyl group, an aromatic group, or an allyl group which contains an oxygen atom and/or a nitrogen atom in the group, wherein $X^1$ is iodine, bromine, or chlorine, and each of n and m are 0, 1, 2, 3, or 4,

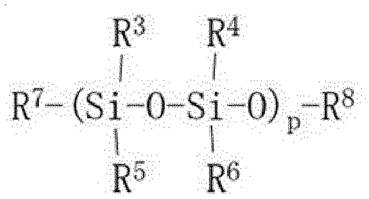

Formula (2)

wherein $R^3$ to $R^8$ are each independently an alkyl group, an aromatic group, or an allyl group which has 1 to 12 carbon atoms, or an alkyl group, an aromatic group, or an allyl group which contains an oxygen atom and/or a nitrogen atom in the group, and may also be a cyclic structure without $R^7$ and $R^8$, and p is a number between 1.5 and 1,000 in increments of 0.5.

[2] The diene rubber composition according to said [1], wherein 1, 2-structure or 3, 4-structure of diene part in the diene rubber component 1 is 20 to 70 % and the weight ratio of the aromatic vinyl compound component in the diene rubber component 1 is 10 to 50 %, and wherein 1, 2-structure or 3, 4-structure of diene part in the diene rubber component 2 is 40 to 80 % and the weight ratio of the aromatic vinyl compound component in the diene rubber component 2 is 5 to 35 %.

[3] The diene rubber composition according to said [1] or [2], wherein the ratio between the diene rubber component 1 and the diene rubber component 2 is 10 to 90 phr of the diene rubber component 2 for 100 phr of the diene rubber component 1.

[4] A rubber compounded composition comprising at least 20 to 150 phr of silica for 100 phr of the total rubber component, wherein said 100 phr of the total rubber component contains at least 20 phr of the diene rubber composition according to said [2] or [3].

[5] A rubber compounded composition comprising at least 20 to 150 phr of silica and 5 to 30 phr of carbon black for 100 phr of an entire rubber component, wherein said 100 phr of the total rubber component contains at least 20 phr of the diene rubber composition according to said [2] or [3].

[6] A method for producing a diene rubber composition, comprising steps of:

i) initiating polymerization of a conjugated diene compound and an aromatic vinyl compound in a hydrocarbon in the presence of an organolithium compound;

ii) producing diene rubber component 1 by terminally modifying a conjugated diene polymer 1, which was polymerized in the step i) and has a peak molecular weight in terms of polystyrene of 400 k to 2,000 kg/mol, right after the polymerization with at least one silicon compound that is represented by formula (1) and/or formula (2);

iii) producing diene rubber component 2 by terminally modifying a conjugated diene polymer 2, which was polymerized in the step i) and has a peak molecular weight in terms of polystyrene of 15 k to 60 kg/mol, right after the polymerization with at least one silicon compound that is represented by formula (1) and/or formula (2);

iv) subjecting the obtained diene rubber component 1 and diene rubber component 2 to a hydrolysis step, preferably steam coagulation, and subsequently drying the resulting product;

$$(X^1)_n(R^1O)_m\text{-Si-}(R^2)_{4\text{-}n\text{-}m} \qquad \text{Formula (3)}$$

wherein $R^1$ and $R^2$ are each an alkyl group, an aromatic group, or an allyl group which has 1 to 12 carbon atoms, or an alkyl group, an aromatic group, or an allyl group which contains an oxygen atom and/or a nitrogen atom in the group, wherein $X^1$ is a halogen atom of iodine, bromine, or chlorine, and each of n and m are 0, 1, 2, 3, or 4,

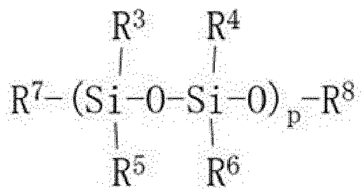

Formula (2)

wherein $R^3$ to $R^8$ are each independently an alkyl group, an aromatic group, or an allyl group which has 1 to 12 carbon atoms, or an alkyl group, an aromatic group, or an allyl group which contains an oxygen atom and/or a nitrogen atom in the group, and may also be a cyclic structure without $R^7$ and $R^8$, and p is a number between 1.5 and 1,000 in increments of 0.5.

[7] The method according to said [6], wherein polymerization of the diene rubber component 1 alone or both the diene rubber component 1 and the diene rubber component 2 is initiated in the presence of an organolithium compound and a secondary amine compound.

[8] The method according to said [6] or [7], wherein, during the polymerization of the diene rubber component 1, after preliminarily polymerizing isoprene with an organolithium compound, conjugated diene compound other than isoprene and an aromatic vinyl compound are polymerized.

[9] The method according to any one of said [6] to [8], wherein, after the polymerization of the diene rubber component 1, conjugated diene compounds, aromatic vinyl compounds, and optionally 1,2- or 3,4-structure modifiers of the diene part are added, and then polymerization is resumed in the presence of organic lithium compound.

[10] The method according to any one of said [6] to [9], wherein after the step iii) and before the step iv), the steam coagulation/ drying of the step iv) are performed after addition of a halogenated silicon compound represented by formula (3) or an alkali metal compound represented by formula (4) in an amount satisfying the conditions of formula (5),

$$(R^9)_q\text{-}M^1\text{-}(X^2)_{4\text{-}q} \qquad \text{Formula (3)}$$

wherein $M^1$ is a silicon atom, $R^9$ is an alkyl group, aromatic group, or allyl group which has 1 to 12 carbons, $X^2$ is a halogen atom of iodine, bromine, or chlorine, and q is 0 or 1,

$$R^{10}\text{-}OM^2 \qquad \text{Formula (4)}$$

wherein $M^2$ is an alkali metal atom, preferably a lithium, sodium, or potassium atom, and $R^{10}$ is an alkyl group, aromatic group, allyl group, or acyl group which has 1 to 12 carbons,

$$1.5 \geqq [nX^1 + (4-q)X^2]/(L + M^2) \geqq 0.9 \qquad \text{Formula (5)}$$

wherein L is the number of moles of organolithium compound added at the initiation of polymerization, $M^2$ is the number of moles of alkali metal compound represented by formula (4), $X^1$ is the number of moles of silicon compound represented by formula (1), $X^2$ is the number of moles of halogenated silicon compound represented by formula (3), n is the same as n in the silicon compound represented by formula (1) and q is the same as q in the halogenated silicon compound represented by formula (3).

[11] The method according to one of said [6] to [10], wherein the ratio between the diene rubber component 1 and the diene rubber component 2 is 10 to 90 phr of the diene rubber component 2 for 100 phr of the diene rubber component 1.

ADVANTAGEOUS EFFECTS OF THE INVENTION

The invention relates to a modified diene rubber composition for silica blending and a method for producing same, which, when used as rubber for tires, is excellent in low fuel consumption and wear resistance, exhibits good workability at the time of blending rubber and excellent wet grip performance as well.

BEST MODE FOR CARRYING OUT THE INVENTION

As the conjugated diene compound used in the present invention, 1,3-butadiene, isoprene, 1,3-pentadiene (piperylene), 2,3-dimethyl-1,3-butadiene, and 1,3-hexadiene, etc. can be exemplified. Among them, 1,3-butadiene and isoprene are preferable from the viewpoints of availability and physical properties of obtainable diene rubber. Especially, 1,3-butadiene is preferable.

Amount of conjugated diene compound used in the diene rubber component 1, which is high molecular weight component of the present invention, is 50 to 90 % by weight, preferably 60 to 85 % by weight.

Amount of conjugated diene compound used in the diene rubber component 2, which is low molecular weight component of the present invention, is 65 to 95 % by weight, preferably 70 to 95 % by weight.

Examples of aromatic vinyl compounds used in the present invention include styrene, $\alpha$-methylstyrene, vinyltoluene, vinylnaphthalene, divinylbenzene, trivinylbenzene, and divinylnaphthalene and the like. Among them, styrene is preferable from the viewpoints of availability and physical properties of obtainable diene rubber.

Amount of aromatic vinyl compounds used in the diene rubber component 1, which is high molecular weight component of the present invention, is 10 to 50 % by weight, preferably 15 to 40 % by weight.

Amount of aromatic vinyl compounds used in the diene rubber component 2, which is low molecular weight component of the present invention, is 5 to 35 % by weight, preferably 5 to 30 % by weight.

Organolithium compounds used in the present invention include lithium compounds having 2 to 20 carbons. For example, they are ethyl lithium, n-propyl lithium, iso-propyl lithium, n-butyl lithium, sec-butyl lithium, tert-butyl lithium, tert-octyl lithium, n-decyl lithium, phenyl lithium, 2-naphthyl lithium, 2-butylphenyl lithium, 4-phenyl-butyl lithium, cyclohexyl lithium, 4-cyclopentyl lithium, 1,4-dilithio butene-2, and the like. N-butyl lithium, sec-butyl lithium and tert-butyl lithium are preferable from the viewpoints of industrial availability and stability, especially n-butyl lithium and sec-butyl lithium are preferable.

Secondary amine compounds used in the present invention are compounds represented by formula (6) or formula (7).

$R^{11}R^{12}N\text{-}H$ Formula (6)

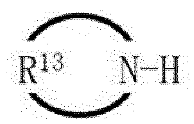

Formula (7)

wherein $R^{11}$ and $R^{12}$ are alkyl group, cycloalkyl group, or aralkyl group which has 1 to 20 carbons, $R^{11}$ and $R^{12}$ may be identical or different, and $R^{13}$ is a divalent alkylene having 3 to 12 methylene groups, bicycloalkane, oxy- or amino-alkylene groups.

As the $R^{11}$ and $R^{12}$ of formula (6), for example, methyl, ethyl, butyl, hexyl, octyl, cyclohexyl, 3-phenyl-1-propyl, isobutyl and the like are mentioned. Specifically, they are methylethylamine, diethylamine, dibutylamine, ethylbutylamine, dihexylamine, dioctylamine, butyl octyl amine, octyl cyclohexylamine, diisobutylamine, butyl (3-phenyl-1-propyl) amine and the like. From industrial availability and solubility in a hydrocarbon solvent, dioctyl amine and dihexyl amine are preferred.

The $R^{13}$ group of formula (7) comprises, for example, trimethylene, tetramethylene, hexamethylene, oxydiethylene, and N-alkyl aza diethylene, etc. Specific examples include pyrrolidine, piperidine, hexamethyleneimine or heptamethyleneimine and the like. Further, it may be 2 annular body such as decahydroisoquinoline or perhydroindole. In particular, pyrrolidine, piperidine, hexamethyleneimine or heptamethyleneimine are preferred.

As the compounds pre-polymerized in the existence of an organic lithium compound and a secondary amine compound, those of faster vulcanization rate than butadiene can be exemplified, specifically those are isoprene, 1,3-pentadiene (piperylene), and 2,3 dimethyl-1,3-butadiene. Isoprene is more preferable from the industrial availability and vulcanization rate.

As silicon compounds represented by the formula (1), following compounds may be mentioned specifically.

They are, for example, tetramethoxysilane, tetraethoxysilane, tetrapropoxysilane, tetrabutoxysilane, tetraphenoxysilane, tetratoluyloxysilane, methyltrimethoxysilane, methyltriethoxysilane, methyltripropoxysilane, methyltributoxysilane, methyltriphenoxysilane, ethyltrimethoxysilane, ethyltriethoxysilane, ethyltripropoxysilane, ethyltributoxysilane, ethyltriphenoxysilane, dimethyldimethoxysilane, dimethyldiethoxysilane, dimethyldipropoxysilane, dimethyldibutoxysilane, dimethyldiphenoxysilane, diethyldimethoxysilane, diethyldiethoxysilane, diethyldipropoxysilane, diethyldibutoxysilane, diethyldiphenoxysilane, vinyltrimethoxysilane, vinyltriethoxysilane, vinyltripropoxysilane, vinyltributoxysilane, vinyltriphenoxysilane, vinyltri(2-methoxyethoxy)silane, vinyltri(methylethylketoxime)silane, methyltri(methylethylketoxime)silane, methyltris(diethylketoxime)silane, ethyltri(methylethylketoxime)silane, ethyltris(dimethylketoxime)silane, allyltriphenoxysilane, octenyltrimethoxysilane, phenyltrimethoxysilane, phenyltriethoxysilane, phenyltripropoxysilane, phenyltributoxysilane, phenyltriphenoxysilane, 2-(3,4-epoxycyclohexyl)ethyltrimethoxysilane, vinyltri(methoxypropoxy) silane, methyltris[2-(dimethylamino)ethoxy]silane, methyltris[2-(diethylamino)ethoxy]silane, methyltris[2-(dibutylamino) ethoxylsilane, ethyltris[2-(dimethylamino)ethoxy]silane, ethyltris[2-(diethylamino)ethoxylsilane, ethyltris[2-(dibutylamino)ethoxylsilane, tetrakis[2-(dimethylamino)ethoxylsilane, tetrakis[2 - (diethylamino)ethoxy]silane, and tetrakis[2-(dibutylamino)ethoxy]silane. Among these, preferred are ketoxime silanes, and those hydrolysis thereof is relatively easy: trimethoxy silanes, triethoxy silanes, tripropoxy silanes, and amino ethoxy silanes which are estimated to facilitate the reaction with the silica while increasing the storage stability of the diene rubber.

Specific examples of amino alkoxy silane compound represented by the formula (1) are shown below. They are dimethylamino methyltrimethoxysilane, 2-dimethylaminoethyl trimethoxysilane, 3-dimethylaminopropyl trimethoxysilane, 4-dimethylamino butyl trimethoxysilane, dimethylaminomethyl dimethoxy methyl silane, 2-dimethylaminoethyl dimethoxy methyl silane, 3-dimethylaminopropyl dimethoxymethylsilane, 4-dimethylamino-butyl dimethoxy methyl silane, dimethylamino methyltriethoxysilane, 2-dimethylaminoethyl triethoxysilane, 3-dimethylamino-propyltriethoxysilane, 3-diethylaminopropyl trimethoxysilane , 4-dimethylamino-butyl triethoxysilane, dimethylaminomethyldiethoxy methyl silane, 2-dimethylaminoethyl diethoxy-methyl silane, 3-dimethylaminopropyl diethoxymethylsilane, 4-dimethylamino-butyl diethoxymethylsilane, N-(3-triethoxysilylpropyl) -4,5-dihydroimidazole, N-allyl - aza-2,2 dimethoxy sila cyclopentane, and the like, and especially preferred are 3-dimethylamino-propyltriethoxysilane, 3-diethylamino-propyl triethoxysilane, and 3-diethylamino-propyl trimethoxysilane.

As halogenated silicon compounds represented by the formula (1), following compounds may be mentioned specifically.

For example, silicon tetrachloride, methyl silicon trichloride, ethyl silicon trichloride, propyl silicon trichloride, butyl silicon trichloride, octyl silicon trichloride, cyclohexyl silicon trichloride, silicon tetrabromide, methyl silicon tribromide, ethyl silicon tribromide, propyl silicon tribromide, butyl silicon tribromide, octyl silicon tribromide, cyclohexyl silicon tribromide, silicon tetraiodide, ethyl silicon triiodide, propyl silicon triiodide, butyl silicon triiodide, octyl silicon triiodide and cyclohexyl silicon triiodide can be exemplified.

Among these, preferred are silicon tetrachloride, methyl silicon trichloride, and ethyl silicon trichloride. Particularly preferred are silicon tetrachloride and methyl silicon trichloride.

A commonly known silicon compound is a compound called silicone oil. The one with viscosity ($mm^2/s$) of 0.3 to 1000 measured at 25 °C is preferable, and 0.6 to 200 is more preferable. Dimethyl silicone oil and methylphenyl silicone oil belong to this category. Modified silicone oils containing polyether group, epoxy group and dialkylamino group are also suitable.

As silicon compounds represented by formula (2) in low molecular weight compounds, followings are mentioned specifically, but are not limited to: 1,1,1,3,3,5,5-heptamethyl-5-methoxytrisiloxane, 1,1,1,3,3,5,5-heptamethyl-5-ethoxytrisiloxane, 1,1,1,3,3,5,5-heptamethyl-5phenoxytrisiloxane, 1,1,1,3,3,5-hexamethyl-5,5 dimethoxytrisiloxane, 1,1,1,3,3,5-hexamethyl-5,5-diethoxytrisiloxane, 1,1,1,3,3,5-hexamethyl-5,5-diphenoxytrisiloxane, 1,1,1,3,3-pentamethyl-5,5,5-trimethoxytrisiloxane, 1,1,1,3,3-pentamethyl -5,5,5-triethoxytrisiloxane, 1,1,1,3,3-pentamethyl-5,5,5-triphenoxytrisiloxane, 1,1,3,3-tetramethyl-1,5,5,5-tetramethoxytrisiloxane, 1,1,3,3-tetramethyl-1,5,5,5-tetraethoxytrisiloxane, 1,1,3,3-tetramethyl-1,5,5,5-tetraphenoxytrisiloxane, 1,3,3-trimethyl-1,1,5,5,5-pentamethoxytrisiloxane, 1,3,3-trimethyl-1,1,5,5,5-pentaethoxytrisiloxane, 1,3,3-trimethyl-1,1,5,5,5-pentaphenoxytrisiloxane, 3,3-dimethyl-1,1,1,5,5,5-hexamethoxytrisiloxane, 3,3-dimethyl-1,1,1,5,5,5-hexaethoxytrisiloxane, 3,3-dimethyl-1,1,1,5,5,5-hexaphenoxytrisiloxane, 1-(3-glycidoxypropyl)-1,1,3,3-tetramethyl-5,5,5-trimethoxytrisiloxane, 1-(3-glycidoxypropyl)-1,1,3,3-tetramethyl-5,5,5-triethoxytrisiloxane, 1-(3-glycidoxypropyl)-1,1,3,3-tetramethyl-5,5,5-triphenoxytrisiloxane, etc.

Among siloxane compounds represented by formula (2), those without $R^7$ and $R^8$ are cyclic siloxane compounds. As cyclic siloxane compounds, specifically, hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclonanosiloxane (D9), and eicosamethylcyclodecasiloxane (D10) may be mentioned. Preferred are D3, D4 and D5.

When the compound of formula (2) is used, it can be used alone, but it is preferable to use in combination with the compound of formula (1) because a branched structure is formed.

As the alkoxysilane compound having a protecting group which becomes a primary amino group after hydrolysis, for example N,N-bis (trimethylsilyl)-3-aminopropyltrimethoxysilane, N, N-bis (trimethylsilyl)-3-aminopropyltrimethoxysilane, N, N-bis(trimethylsilyl)-3-aminopropyl tripropoxy silane, N, N-bis(trimethylsilyl)-2-aminoethyl trimethoxy silane, N, N-bis(trimethylsilyl)-2-aminoethyl methyldimethoxy silane, N, N-bis (trimethylsilyl) aminoethyl methyl diethoxy silane, 1-trimethylsilyl-2,2-dimethoxy-1-aza-2-silacyclopentane, N, N-diethyl-3-aminopropyl-trimethoxy silane, N, N-diethyl -3 -aminopropyltriethoxy silane, 2- (triethoxysilylethyl) pyridine,y- isocyanate propyl triethoxysilane and the like can be exemplified. In ketimines, for example, those which are easily hydrolyzed, 3-triethoxysilyl-N-(1,3-dimethylbutylidene) propylamine, 3-trimethoxysilyl-N-(1,3-dimethylbutylidene)propylamine, 3-tripropoxysilyl-N-(1,3-dimethyl-butylidene) propylamine, etc. are mentioned.

The diene rubber component of the present invention is produced by a solution polymerization reaction, and conditions of usage, such as the amount of the raw material and the reaction temperature, reaction time for the production of the solution polymerization diene rubber are as follows.

For the solution polymerization of the diene rubber, commonly practiced method is used, that is: the conjugated diene compound or the aromatic vinyl compound are polymerized in the condition of temperature 10 to 120 °C for several tens of minutes to several hours, in the presence of an organic lithium compound and polar compounds such as an ether compound or an amine compound.

The amount of the organic lithium compound to be used, is usually better to be in the range of 0.01 to 10 millimoles per 100g of diene rubber. When less than 0.01 millimole, molecular weight becomes too high, and MV viscosity and the solution viscosity become too high, which cause problems in rubber production processes and tire manufacturing processes. When it exceeds 10 millimole, the molecular weight of the diene rubber becomes too low.

In the polymerization, as the ether compound for adjusting the microstructure, the vinyl content (the 1, 2-structure or 3, 4-structure of the diene part) in particular, of the diene monomer portion of the diene rubber, such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, tetrahydrofuran (THF), 2,2-di (2-tetrahydrofuryl) propane (DTHFP), bis tetrahydrofurfuryl formal, tetrahydrofurfuryl alcohol methyl ether, tetrahydrofurfuryl alcohol ethyl ether, tetrahydrofurfuryl alcohol butyl ether, alpha-methoxy tetrahydrofurane, dimethoxybenzene, and dimethoxyethane are used.

As the amine compound, tertiary amines such as, triethylamine, pyridine, N, N, N ', N'-tetramethylethylenediamine, dipiperidinoethane, N, N-diethylethanolamine methyl ether, N, N-diethylethanolamine ethyl ether, N, N-diethylethanolamine butyl ether are used.

As preferred compounds, considering the polymerization rate and the modification efficiency, tetrahydrofuran (THF), 2,2-di (2-tetrahydrofuryl) propane (DTHFP) and the like can be exemplified.

The amount of the addition of these compounds is usually 0.01 to 10 mol, and preferably from 0.2 to 5 mol, per 1 mol of the organic lithium compound in case of including such as a plurality of nitrogen atoms and oxygen atoms. Compounds having one oxygen atom in the molecule, such as tetrahydrofuran, are preferably added in an amount of 0.05 to 10 % for solvent.

The polymerization reaction is carried out in a hydrocarbon solvent. Suitable hydrocarbon solvents is selected from aliphatic hydrocarbons, aromatic hydrocarbons, and alicyclic hydrocarbons, in particular propane, n-butane, isobutane, n-pentane, iso-pentane, cyclopentane, n-hexane, cyclohexane, methylcyclohexane, n-heptane, cyclopentane, propene, 1-butene, iso-butene, trans-2-butene, cis-2-butene, 1-pentene, 2-pentene, 1-hexene, 2-hexene, benzene, toluene, xylene, ethylbenzene which has 3 to 12 carbons, etc. Preferably, n-pentane, iso-pentane, cyclopentane, n-hexane, cyclohexane, and n-heptane. These solvents may be used by mixing two or more.

In the present invention, mainly conjugated diene compounds, or a conjugated diene compound and an aromatic vinyl compound are polymerized by anionic polymerization, and a silicon compound is reacted with the active diene rubber. This modification reaction is carried out, in batch polymerization with insulation method, at 0 to 120 °C., preferably 20 to 100 °C., the reaction time is 1 to 60 minutes, preferably 5 to 40 minutes. In the case of isothermal method, the temperature is 30 to 100 °C., preferably 50 to 80 °C., and the reaction time is 1 to 250 minutes, preferably 30 to 200 minutes.

In the case of continuous polymerization, the temperature is 30 to 100 °C, preferably 50 to 80 °C.

As for the mode of the polymerization process used in the present invention, both batch polymerization process and continuous polymerization process are possible. The batch polymerization method is suitable for diene rubber particularly to produce rebound resilience, and the continuous polymerization method is suitable for diene rubber particularly to produce wear resistance and workability.

The diene rubber component 1, which is the high molecular weight component of the present invention, can be produced by either batch polymerization or continuous polymerization, but continuous polymerization is preferable.

The diene rubber component 2, which is the low molecular weight component of the present invention, can be produced by either batch polymerization or continuous polymerization, but batch polymerization is suitable.

Although it is convenient to polymerize the diene rubber component 1 and the diene rubber component 2 of the present invention in separate polymerization vessels, it is also possible to produce both components in one polymerization

vessel by producing the diene rubber component 1, followed by adding a predetermined polar compound, a conjugated diene compound, an aromatic vinyl compound, and an initiator.

In steps ii) and iii), the silicon compound represented by formula (1) is added so two-branched structure in the diene rubber is made to be 40 % or less. The amount of the silane compound to be added, in steps ii) and iii), is preferably an amount corresponding to 0.7 to 2 times, more preferably 0.9 to 1.5 times, of the number of molecules per one active diene rubber molecule. If it is less than 0.7, reactivity with silica is lowered because of smaller number of alkoxysilyl group introduced into the active diene rubber. If it is more than twice, storage stability worsens.

When the siloxane compound represented by formula (2) is used in step iii), it is added so the amount of Si-O bonds per one remaining active diene rubber molecule is equal to or more than the equivalent amount, preferably 1 to 100 times equivalent, and more preferably 1 to 5 times equivalent.

In this case, it is also preferable to use a silicon compound with three or more functional groups represented by formula (1) in combination.

According to the present invention, branch structure after steam coagulation and drying is estimated to be a two-branched structure-A or a two-branched structure-A', and to be stable during rubber storage and has high reactivity with silica when compounded. In this reaction structure, the two-branched structure - A is estimated to have been produced by condensation reaction of (Rubber)-Si-OH which is made by hydrolyzing (Rubber)-Si-OR, and the (Rubber)-Si-OR is made by modification with a silicon compound represented by formula (1). Furthermore, (Rubber)-Si-(O-Si)n-OLi modified with the silicon compound represented by formula (2) is also estimated to become (Rubber)-Si-$(O\text{-}Si)_n$-OH when neutralized. Therefore, it becomes a two-branched structure-A' which is similar to the two-branched structure-A.

Reactivity with the conventional two-branched structure-B and silica is low.

Two-branched structure-A (the structure of the present invention): (Rubber)-Si-O-Si-(Rubber)

Two-branched structure-A' (the structure of the present invention): (Rubber)-Si-O-$(Si\text{-}O)_n$-Si-(Rubber)

Two-branched structure-B (conventional structure): (Rubber)-Si-(Rubber)

The ratio of these branch structures are obtainable by GPC of the manufacturing process.

In the present invention, in order to further improve the drying step and storage stability, the reaction of at least one silicon compound represented by formula (1) and/or formula (2) with active diene rubber in steps ii) and iii) is carried out under conditions where the formation of the two-branched structure-B is minimized. Furthermore, before the steam coagulation and drying in step v), a halogenated silicon compound represented by formula (3) or an alkali metal compound represented by formula (4) may be added. The halogenated silicon compound or alkali metal compound is added under the condition satisfying formula (5), for nutralizing what is deactivated by impurities contained in the solvent or monomer, or the lithium compound, etc. produced as a by-product in the reaction with the active diene rubber and the silicon compound or unreacted Si-Cl bonds and byproduct HCl.

(Rubber)-Si-OLi is difficult to be condensed, but when neutralized it becomes (Rubber)-Si-OH. This facilitates the condensation reaction to form (Rubber)-Si-O-Si-(Rubber), improving storage stability.

The compounds represented by formulas (1) and formula (2) may produce acidic or alkaline compound as byproduct, depending on the compound used in the modification reaction, and therefore neutralization method must be changed. It is preferable that the adjustment in that case is in the range of $1.5 \geq [nX^1+(4-q)X^2]/(L+M^2) \geq 0.9$, as shown in formula (5). If it is 0.9 or less, the alkalinity becomes so high that the condensation reaction being difficult. 0.95 or more is preferable.

If it is 1.5 or higher, the acidity becomes so high that metal corrosion of manufacturing facilities being a problem. 1.2 or less is preferable.

Mooney viscosity (abbreviated as MV, may be referred to measurement conditions are the $ML_{1+4/100\ °C}$.) of the diene rubber obtained in the present invention is preferably in the range of 20 to 150, if it is less than 20, abrasion resistance, rebound resilience is deteriorated, whereas, the workability is reduced if it is more than 150.

Content of the 1, 2-structure or 3, 4-structure in the diene part of the diene rubber in the present invention generally can be varied in the range of 20 to 80 %. Vinyl content is to be lower in the case of emphasizing wear resistance, the vinyl content is to be higher in the case of emphasizing braking performance on wet road surface. The 1,2-structure or 3,4-structure of the diene part in the conjugated diene polymer of diene rubber component 1, which is a high molecular weight component, is 20 to 70 %, preferably 25 to 60 %, and the 1,2-structure or 3,4-structure of the diene part in the conjugated diene polymer of diene rubber component 2, which is a low molecular weight component, is 40 to 80 %, preferably 45 to 75 %.

The ratio between the diene rubber component 1 and the diene rubber component 2 is 10 to 90 phr of the diene rubber component 2 for 100 phr of the diene rubber component 1, and preferably 15 phr to 80 phr. If it is 10 phr or less, the compound MV becomes so high that the workability being poor. If it is 90 phr or higher, the adhesiveness of the rubber composition becomes so high that handling to be difficult.

Extender oil can also be added to a polymerization reaction solution containing the diene rubber of the present invention. The extender oils of those commonly used in the rubber industry, such as paraffinic extender oil, aromatic extender oil, and naphthenic extender oil can be used.

Pour point of the extender oil is preferably between minus20 and 50 °C., more preferably minus 10 and 30 °C. In this range, extended easily, the rubber composition having excellent tensile properties and low heat buildup of the balance is obtained. Suitable aromatic carbon content of extender oil (CA%, Kurtz analysis) is preferably 20 % or more, more preferably 25 % or more, and preferably paraffin carbon content of extender oil (CP%) is 55 % or less, more preferably 45 % or less. When CA% is too small, or CP% is too large, the tensile properties is insufficient. The content of polycyclic aromatic compounds in the extender oil is preferably less than 3 %. The content is determined by IP346 method (testing method of The Institute Petroleum of UK).

The content of the extender oil of the rubber composition is, for 100 parts by weight of the rubber composition, preferably 0 to 40 parts by weight, more preferably 5 to 30 parts by weight. When the content of the extender oil is in this range, the viscosity of the rubber composition containing silica becomes moderate, and tensile properties and low heat build is excellently well-balanced.

When using the diene rubber of the present invention as a rubber composition for a tire, it is possible to use, as far as within the range that does not essentially impair the effects of the present invention, natural rubber, isoprene rubber, butadiene rubber, and emulsion-polymerized styrene-butadiene rubber for blending, with a reinforcing agent, and various additives such as silica and / or carbon black, and after kneaded by a roll mill, a Banbury mixer, by adding a vulcanization accelerator, sulfur, etc. and the rubber can become a rubber for a tire such as a tread, a sidewall and a carcass. These compositions can also be used for belt, vibration-proof rubber and other industrial goods.

As a reinforcing material to be filled when the diene rubber of the present invention is used in a tire, especially in a tire tread, a filler having a hydroxyl group on the surface, such as silica or the like, is optimal. It is also possible to use a combination of carbon black. Filling amount of the filler relative to the total rubber component of 100 phr, is preferably 20 to 150 phr, more preferably 30 to 100 phr.

As silica, for example, dry silica, wet silica, colloidal silica, precipitated silica and the like can be used. Among these, wet silica composed mainly of hydrous silicic acid is particularly preferred. These silica may be used alone or in combination of two or more thereof.

The particle size of the primary particles of the silica is not particularly limited, but 1 to 200 nm, more preferably 3 to 100 nm, particularly preferably 5 to 60 nm. With the particle size of the primary particles of silica is within this range, excellent tensile properties and low heat build-balanced are achieved. The particle size of the primary particles can be measured by an electron microscope or a specific surface area and the like.

It is preferable to blend a silane coupling agent into the rubber composition of the present invention in the rubber compounding, for the purpose of further improvement of tensile properties and low heat build-up. Examples of the silane coupling agents are:β-(3,4-epoxycyclohexyl) ethyltrimethoxysilane, N-(β-aminoethyl)-γ-aminopropyltrimethoxysilane, tetrasulfide group such as bis(3-triethoxysilylpropyl) tetrasulfide, bis(3-triethoxysilylpropyl-iso-propoxy)tetrasulfide, bis(3-tributoxysilylpropyl)tetrasulfide, γ-trimethoxysilylpropyl dimethylthiocarbamoyl tetrasulfide, γ-trimethoxysilylpropyl benzothiazyl tetrasulfide, and bis(3-triethoxysilylpropyl)disulfide, bis(3-tri-iso-propoxy silyl propyl)disulfide, bis(3-tributoxysilyl propyl)disulfide, γ-trimethoxysilylpropyl dimethyl thiocarbamoyl disul-trimethoxysilylpropyl benzothiazyl disulfide and the like.

Because to avoid scorch during kneading, silane coupling agent is preferably those sulfur contained in the molecule is 4 or less. More preferably sulfur is 2 or less. These silane coupling agents may be used alone or in combination of two or more. The amount of the silane coupling agent with respect to 100 parts by weight of silica is, preferably 0.1 to 30 parts by weight, more preferably 1 to 20 parts by weight, particularly preferably 2 to 10 parts by weight.

As the carbon black, of the grade of N110, N220, N330, N440, N550, and the like can be used. Carbon blacks may be used alone or in combination of two or more thereof.

The specific surface area of carbon black is not particularly limited, but a nitrogen absorption specific surface area ($N_2$ SA) is preferably 5 to 200 $m^2$/g, more preferably 50 to 150 $m^2$/g, particularly preferably 80 to 130 $m^2$/g. When the nitrogen adsorption specific surface area is within this range, more excellent tensile properties can be obtained. Further, DBP adsorption amount of carbon black is also not particularly limited, but it is preferably 5 to 300 ml/100 g, more preferably 50 to 200 ml/100 g, particularly preferably 80 to 160 ml/100 g. When DBP adsorption is within this range, a rubber compounded composition having more excellent tensile properties are obtained. Further, as the carbon black, a high-structure carbon black, as disclosed in JP A H05-230290, which has specific surface area by the adsorption of cetyltrimethylammonium bromide is 110 to 170 $m^2$/g, DBP (24M4DBP) oil absorption under 4 times high pressure of 24,000 psi is 110 to 130 ml/100g can be used and improves abrasion resistance of rubber compound.

The amount of carbon black is, per 100 parts by weight of the rubber component, 1 to 50 parts by weight, preferably 2 to 30 parts by weight, particularly preferably 3 to 20 parts by weight.

Incidentally, the rubber compounded composition of the present invention, can use a vulcanizing agent, based on the total rubber components 100 phr, preferably in the range of 0.5 to 10 phr, more preferably 1 to 6 phr.

As the vulcanizing agent, typically sulfur, other sulfur-containing compounds and such as peroxides can be exemplified.

Further, vulcanization accelerators such as sulfenamide, guanidine and thiuram group may be used in conjunction with vulcanizing agent, at an amount according to the necessity. Furthermore, zinc white, vulcanization auxiliaries, antioxidants, processing aids, and so on, may be used at an amount according to the necessity.

Further, various additives to the rubber compounded composition obtained by using the diene rubber of the present invention is not particularly limited, but as the purpose of workability improver when kneading, or as further improving the balance of wet skid characteristics, rebound resilience, wear resistance , such as vulcanizing agent, vulcanization accelerator, zinc white, antioxidant, scorch retarder, tackifier and other fillers to be blended with other extender oil and conventional rubber composition, and compatibilizers including epoxy group-containing compounds, carboxylic acid compounds, carboxylic acid ester compounds, ketone compounds, ether compounds, aldehyde compounds, organic compounds selected from hydroxyl group-containing compounds and amino group containing compound or alkoxysilane compounds, silicon compounds selected from siloxane compounds and aminosilane compound can also be added at the time of kneading.

Next, the present invention is further explanation in detail using embodiments, but the present invention is not limited by these examples. The physical properties of the polymers were measured according to the following methods.

Peak molecular weight (Mp) and peak area were calculated as follows. The molecular weight at the highest point of the peak of GPC analysis immediately after polymerization of the conjugated diene polymer 1 is designated as peak molecular weight, Mp1. After the addition of silicon compound, peaks corresponding to two-branched structure, three-branched structure, and fourbranched structure and the like will appear. The area of the peak corresponding to Mp1 after modification is calculated as $C_{Mp1}$, and areas of the peaks of two-branched or more is calculated as $C_{Mp1,2<}$.

Similar calculations are made based on the GPC chart after steam coagulation and drying, which show that rubber molecules with silicone compounds attached to the ends or with silicone compounds attached in a two-branched structure condense, resulting that $C_{Mp1,D}$ gets smaller than $C_{Mp1}$, and $C_{Mp1,2<,D}$ larger than $C_{Mp1,2}$<. Storage stability and reactivity with silica increase as $C_{Mp1,2<,D}$ gets larger than CMp1,2<.

In the present invention, Mp1 will be 400 kg/mol or more.

The molecular weight at the highest point of the peak of GPC analysis immediately after polymerization of the conjugated diene polymer 2 is designated as peak molecular weight, Mp2. After the addition of silicon compound, peaks corresponding to two-branched structure, three-branched structure, and fourbranched structure and the like will appear. The area of the peak corresponding to Mp2 after modification is calculated as $C_{Mp2}$, and areas of the peaks of two-branched or more is calculated as $C_{Mp2,2<}$.

Similar calculations are made based on the GPC chart after steam coagulation and drying, which show that rubber molecules with silicone compounds attached to the ends or with silicone compounds attached in a two-branched structure condense, resulting that area of $C_{Mp1,D}$ gets smaller and that of $C_{Mp2,2<,D}$ larger. Storage stability and reactivity with silica increase as $C_{Mp1,2<,D}$ gets larger than $C_{Mp1,2}$<.

In the present invention, Mp2 will be less than 60 kg/mol.

Styrene unit content in the polymer was calculated from an integral ratio of $^1$H-NMR spectrum. The glass transition point of the polymer ($T_g$) was measured using a Perkin Elmer differential scanning calorimetry analyzer (DSC) 7 type apparatus, under the conditions of the temperature, raised at 10 °C/min after cooling to - 100 °C.

Kneading properties, the physical properties of the vulcanized rubber were measured by the following method and Mooney viscosity of the rubber compounded composition were measured in the following manner.

Kneaded for preparing vulcanizate of the rubber compounded composition, - according to the JIS K 6299:2001 "rubber manufacturing method of the test sample".

Kneading of the rubber composition containing no vulcanizing agent (A kneading) used Laboplastomill of Toyoseiki Co., Ltd. As the conditions, filling factor was about 65 % (volume), rotor revolution was 50 rpm, starting temperature was 90 °C. Kneading conditions (B kneading) of blending a vulcanizing agent to the rubber compounded composition after A kneading was done by 8 inches roll of Daihan Co., Ltd., vulcanizer was blended at room temperature.

Temperature dispersion of viscoelasticity test was measured by a "TA INSTRUMENTS Ltd. viscoelasticity measuring apparatus RSA3", according to JIS K 7244-7: 2007 "Plastics - Test method for dynamic mechanical properties - Part 7: - Non-resonance method torsional oscillation", the measurement frequency was 10 Hz, measuring temperature was minus50 to 80 °C., a dynamic strain of 0.1 % at a rising temperature rate of 4 °C/min, specimen size was the "width 5 mm × length 40 mm × thickness of 1 mm".

The smaller the tan $\delta$ (60 °C), the greater the rebound resilience, and lower heat generation. The larger the tan $\delta$ (0 °C), the more improved and better the wet grip performance is.

(2) Tensile properties, e.g. strength at break ($T_B$), the modulus, the elongation at break, and the like was measured according to JIS K6251: 2004.

Abrasion resistance was measured according to JIS K6264-2:2005 "Rubber, vulcanized or thermoplastic - wear resistance of Determination - Part 2: Test method" in Method B of Akron abrasion test, the wear of the vulcanized rubber compounded composition was measured. The abrasion resistance was indicated by indices as abrasion resistance index, and that of the control sample is set as 100. The larger index the better.

Mooney viscosity was measured according to JIS K6300-2001, and Mooney viscosity [$ML_{1+4/100\ °C}$] was

measured at 100 °C.

EXAMPLES

[Diene rubber component 1-1]

The autoclave of 10L internal volume was thoroughly purged with dry nitrogen, 5500 g of cyclohexane was placed, 215 mg (1.17 mmol) of 2,2-di (2-tetrahydrofuryl) propane (DTHFP), 210 g (2.02 mol) of styrene, 460 g (8.50 mol) of 1,3-butadiene were placed in the autoclave. After adjusting the temperature in the autoclave to 25 °C, 74.7 mg (1.17 mmol) of n-butyllithium effective for polymerization was added to the autoclave to start polymerization. Polymerization temperature adiabatically raised, the maximum temperature reached 78 °C. At this point, added 30 g of 1,3-butadiene, and the polymerization was carried out for further 5 minutes. Here, 20 mL of polymerization solution was withdrawn from the autoclave into a vessel sufficiently substituted by nitrogen for analysis, and later diluted and GPC analysis was performed. Subsequently, 0.324 g (1.17 mmol) of 3-diethylaminopropyltriethoxysilane was added in autoclave and reacted for 15 minutes. This rubber was designated as [diene rubber component 1-1]. The styrene content in the diene rubber was 30 % and the vinyl content was 44 %. Mp determined by GPC analysis was 560 kg/mol.

This solution was later mixed with diene rubber component 2, then desolvated by steam coagulation method, and dried with a roll at 110 °C.

[Diene rubber component 2-1]

The autoclave of 10L internal volume was thoroughly purged with dry nitrogen, 5500 g of cyclohexane was placed, 5.27 g (114 mmol) of 2,2-di (2-tetrahydrofuryl) propane (DTHFP), 200 g (1.92 mol) of styrene, 770 g (14.24 mol) of 1,3-butadiene were placed in the autoclave. After adjusting the temperature in the autoclave to 25 °C, 1.83 g (29 mmol) of n-butyllithium was added to the autoclave to start polymerization. Polymerization temperature adiabatically raised, the maximum temperature reached 88 ° C. At this point, added 30 g of 1,3-butadiene, and the polymerization was carried out for further 5 minutes. Here, 20 mL of polymerization solution was withdrawn from the autoclave into a vessel sufficiently substituted by nitrogen for analysis, and later diluted and GPC analysis was performed. Subsequently, 7.93 g (28.6 mmol) of 3-diethylaminopropyltriethoxysilane was added in autoclave and reacted for 15 minutes. The remaining solution was desolvated by steam coagulation method, and dried at 110 ° C by the roll. This rubber was designated as [diene rubber component 2-1]. The styrene content in the diene rubber was 21 %. The vinyl content was 59 %. Mp determined by GPC analysis was 34 kg/mol.

[Diene rubber component 2-2]

The same procedure was used as in [diene rubber component 2-1] except that 25.6 g (553 mmol) of 2,2-di(2-tetrahydrofuryl)propane (DTHFP), 8.89 g (141 mmol) of n-butyl lithium and 38.5 g (139 mmol) of 3-diethylaminopropyltriethoxysilane, which were the same materials as [diene rubber component 2-1], were increasingly used, to produce [diene rubber component 2-2]. The styrene content in the diene rubber was 21 %. The vinyl content was 58 %. Mp determined by GPC analysis was 7 kg/mol.

[Diene rubber component 2-3]

The same procedure was used as in [diene rubber component 2-1] except that 10.5 g (118 mmol) of 2,2-di(2-tetrahydrofuryl)propane (DTHFP), which is the same material as [diene rubber component 2-1], was increasingly used, to produce [diene rubber component 2-3]. The styrene content in the diene rubber was 20 %. The vinyl content was 73 %. Mp determined by GPC analysis was 38 kg/mol.

The [diene rubber component 1-1], [diene rubber component 2-1], [diene rubber component 2-2], [diene rubber component 2-3], which were produced experimentally in the Examples, and emulsion-polymerized ESBR (commercially available JSR #1723 was used as it was) were mixed in the proportions in Table 2, subject to steam coagulation and drying with a heat roll, thereafter blending was made according to the vulcanization compounding formulations of Table 1 and vulcanization properties were evaluated. Evaluation results are also shown in Table 2.

In table 2, compound MV, tensile Strength, elongation at break, modulus ratio $M_{300}/M_{100}$, Akron abrasion resistance and dynamic viscoelasticity test results are shown. Physical properties are represented as index of Comparative Example 2 as 100, and for all items, larger index shows better physical properties. In comparison with Comparative Example 2, which shows an emulsion-polymerized SBR that is often used in tire applications, Example 1, Example 2, and Comparative Example 1 are all superior to Comparative Example 2 in terms of tan $\delta$ (0 °C) in the dynamic viscoelasticity test corresponding to wet grip performance, and tan $\delta$ (60 °C) corresponding to fuel consumption performance. Although

the compound MV is slightly higher, the modulus ratio shows larger value as reinforcement with the silica is higher, and has a high correlation between Akron abrasion resistance. Compared to Comparative Example 1, diene rubber component 2 with Mp2 less than 10 kg/mol is good for improving workability, but has little effect on improving vulcanization properties.

Based on these physical property evaluation results and the like, they are rubber compositions and rubber compounded compositions with an excellent balance of low fuel consumption, wear resistance, wet grip performance, and workability.

Table 1

| Table 1: Vulcanization Compounding Formulations | | |
|---|---|---|
| Formulations | | phr |
| Rubber | | 100 |
| Silica | | 70 |
| Silane coupling agent | Si69 | 6 |
| Polyethylene glycol | PEG4000 | 4 |
| Carbon black | N339 | 4 |
| Zinc white | | 3 |
| Stearic acid | | 2 |
| Antioxidant | 6C | 1 |
| Vulcanization accelerator | D | 0.5 |
| Vulcanization accelerator | CZ | 2.5 |
| Sulfur | | 1.5 |
| Total | | 194.5 |
| Cf-1) phr: parts per hundred rubber<br>Cf-2) Si69: bis(3-triethoxysilylpropyl) tetrasulfide<br>Cf-3) PEG4000: polyethylene glycol 4000<br>Cf-4) 6C; N-phenyl-N'-(1,3 dimethylbutyl)-p-phenyldiamine<br>Cf-5) D: N,N'-diphenylguanidine<br>Cf-6) CZ: N-cyclohexyl-2-benzothiazolylsulfenamide | | |

Table 2

| Table 2: Vulcanization Properties of the diene rubber compositions | | | | | |
|---|---|---|---|---|---|
| | Unit | Example 1 | Example 2 | Comparative Example 1 | Comparative Example 2 |
| Diene rubber component 1 1 | phr | 100 | 100 | 100 | --- |
| Diene rubber component 2-1 | phr | 30 | --- | --- | --- |
| Diene rubber component 2-2 | phr | --- | --- | 30 | --- |
| Diene rubber component 2-3 | phr | --- | 30 | --- | --- |
| #1723 | phr | --- | --- | --- | 130 |
| Diene rubber component 1<br>Before steam coagulation/ drying<br>Two branched structure or more by Si compounds ($C_{Mp1,2<}$) | % | 35 | 35 | 35 | --- |
| Two branched structure or more after steam coagulation/ drying ($C_{Mp1,2<,D}$) | % | 56 | 56 | 56 | --- |
| Increase amount of peak area after steam coagulation/ drying<br>$\Delta Cp1$ ($C_{Mp1,2<,D}$ - $C_{Mp1,2<}$) | % | 21 | 21 | 21 | --- |

(continued)

| Table 2: Vulcanization Properties of the diene rubber compositions | | | | | |
|---|---|---|---|---|---|
| | Unit | Example 1 | Example 2 | Comparative Example 1 | Comparative Example 2 |
| Diene rubber component 2<br>Before steam coagulation/ drying<br>Two branched structure or more by Si compounds ($C_{Mp2,2<}$) | % | 21 | 23 | 46 | --- |
| Two-branched structure or more after steam coagulation/ drying ($C_{Mp,2,2<,D}$) | % | 53 | 56 | 64 | --- |
| Increase amount of peak area after steam coagulation/ drying<br>$\Delta$Cp2 ($C_{Mp2,2<,D}$ - $C_{Mp2,2<}$) | % | 32 | 33 | 18 | --- |
| Compound MV ($ML_{1+4/100°C}$) | | 72 | 75 | 71 | 68 |
| Tensile strength ($T_B$) | MPa | 23.0 | 23.5 | 21.5 | 22.1 |
| Elongation at break ($E_B$) | % | 430 | 410 | 390 | 380 |
| Modulus ratio ($M_{300}/M_{100}$) | | 5.2 | 5.0 | 4.5 | 3.2 |
| Akron abrasion resistance | Index | 120 | 125 | 105 | 100 |
| Dynamic viscoelasticity test | | | | | |
| tan $\delta$ (0 °C) | Index | 145 | 153 | 138 | 100 |
| tan $\delta$ (60 °C) | Index | 163 | 150 | 145 | 100 |

[Diene rubber component 1-2]

The autoclave of 5L internal volume was thoroughly purged with dry nitrogen, 2890 g of cyclohexane was placed, 100 mg (0.544 mmol) of 2,2-di (2-tetrahydrofuryl) propane (DTHFP), 110 g of styrene, 243 g of 1,3-butadiene were placed in the autoclave. After adjusting the temperature in the autoclave to 40 °C, 87.1 mg (1.36 mmol) of n-butyllithium effective for polymerization was added to the autoclave to start polymerization. Polymerization temperature adiabatically raised, the maximum temperature reached 78 °C. At this point, added 16 g of 1,3-butadiene, and the polymerization was carried out for further 5 minutes. Subsequently, 377 mg (1.36 mmol) of 3-diethylaminopropyltriethoxysilane was added in autoclave and reacted for 15 minutes. This polymerization was repeated six times, and the entire amount was placed in one tank and stirred uniformly. This rubber was designated as [diene rubber component 1-2]. The styrene content in the diene rubber was 30 % and the vinyl content was 47 %. Mp determined by GPC analysis was 568 kg/mol.

This solution was later mixed with diene rubber component 2, then desolvated by steam coagulation method, and dried with a roll at 110 °C.

[Diene rubber component 2-4]

The autoclave of 10L internal volume was thoroughly purged with dry nitrogen, 5500 g of cyclohexane was placed, 5.27 g (114 mmol) of 2,2-di (2-tetrahydrofuryl) propane (DTHFP), 200 g (1.92 mol) of styrene, 770 g (14.24 mol) of 1,3-butadiene were placed in the autoclave. After adjusting the temperature in the autoclave to 25 °C, 1.83 g (29 mmol) of n-butyllithium was added to the autoclave to start polymerization. Polymerization adiabatically raised the temperature and the maximum temperature reached 83 °C. At this point, added 30 g of 1,3-butadiene, and the polymerization was carried out for further 5 minutes. Subsequently, 7.93 g (28.6 mmol) of 3-diethylaminopropyltriethoxysilane was added in autoclave and reacted for 15 minutes. This solution was stored as solution. This rubber was designated as [diene rubber component 2-4]. The styrene content in the diene rubber was 21 %. The vinyl content was 69 %. Mp determined by GPC analysis was 38 kg/mol.

[Diene rubber component 2-5]

The same procedure was used as in [diene rubber component 2-4] except that 3-diethylaminopropyltriethoxysilane which was used in [diene rubber component 2-4] was replaced with 2.43 g (14.3 mmol) of silicon tetrachloride, to

produce [diene rubber component 2-5]. The styrene content in the diene rubber was 20 %. The vinyl content was 68 %. Mp determined by GPC analysis was 40.0 kg/mol.

[Diene rubber component 2-6]

The same procedure was used as in [diene rubber component 2-4] except that 3-diethylaminopropyltriethoxysilane which was used in [diene rubber component 2-4] was replaced with 4.25 g (14.4 mmol) of octamethylcyclotetrasiloxane (D4), to produce [diene rubber component 2-6]. The styrene content in the diene rubber was 20 %. The vinyl content was 70 %. Mp determined by GPC analysis was 47 kg/mol.

The [diene rubber component 1-2], [diene rubber component 2-4], [diene rubber component 2-5], [diene rubber component 2-6], which was produced experimentally in the Examples, TDAE (aromatic oil), and emulsion-polymerized ESBR (commercially available JSR #1723 was used as it was), in Examples 3 to 5, after mixing 20 phr of each diene rubber component 2-4 to 2-6 for 100 phr of diene rubber component 1-2, were desolvated by steam coagulation, and dried with a roll at 110 °C. In Examples 6 to 8, after mixing 40 phr of each diene rubber component 2-4 to 2-6 for diene rubber component 1-2, they were desolvated by steam coagulation, and dried with a roll at 110 °C.

In GPC analysis chart, high molecular weight components and low molecular weight components were divided by a simple method wherein perpendicular lines through the valleys of the peaks are drawn, and the ratio between diene rubber component 1 and diene rubber component 2 was obtained from the areas, which are shown in Table 4.

Blending was made according to the vulcanization compounding formulations of Table 3 and vulcanization properties were evaluated. Evaluation results are also shown in Table 4.

In table 4, compound MV, tensile Strength, elongation at break, modulus ratio M300/M100, Akron abrasion resistance and dynamic viscoelasticity test results are shown. Physical properties are represented as index of Comparative Example 4 as 100, and for all items, larger index shows better physical properties.

In comparison with Comparative Example 4, in which an emulsion polymerized SBR that is often used in tire applications is shown, in Examples 3 to 8, the tensile strength show greater and elongation at break show equal or greater.

In comparison with Comparative Example 4, the modulus ratios, which is said to reflect the reactivity with silica, show larger in Examples 3 to 8, and the results of Akron abrasion and dynamic viscoelasticity tests are both greatly improved.

The effect of the type of the terminal modifier in the diene rubber component 2 does not show a particularly large difference in Examples 3 to 5 in which the diene rubber component 2 is 20 phr and Examples 6 to 8 in which 40 phr, relative to 100 phr of the diene rubber component 1.

Based on these physical property evaluation results and the like, they are rubber compositions and rubber compounded compositions with an excellent balance of low fuel consumption, wear resistance, wet grip performance, and workability.

Table 3

| Table 3: Vulcanization Compounding Formulations | | |
|---|---|---|
| Formulations | | phr |
| Rubber | | 100 |
| Silica | | 55 |
| Silane coupling agent | Si69 | 6 |
| Polyethylene glycol | PEG4000 | 4 |
| Carbon black | #70 | 4 |
| Aromatic oil | TDAE | 10 |
| Zinc white | | 3 |
| Stearic acid | | 2 |
| Antioxidant | 6C | 1 |
| Vulcanization accelerator | D | 1 |
| Vulcanization accelerator | CZ | 2 |
| Sulfur | | 2 |

(continued)

| Table 3: Vulcanization Compounding Formulations | | |
|---|---|---|
| Formulations | | phr |
| Total | | 190 |
| Cf-7) #70: Carbon Black of ASAHI CARBON Co.. Ltd.<br>Cf-8) TDAE; Treated Distillate Aromatic Extract | | |

Table 4

| Table 4: Vulcanization Properties of the diene rubber compositions | | | | | | | | | |
|---|---|---|---|---|---|---|---|---|---|
| | Unit | Example 3 | Example 4 | Example 5 | Example 6 | Example 7 | Example 8 | Comparative Example 3 | Comparative Example 4 |
| Diene rubber component 1-2 | phr | 83.2 | 81.8 | 82.2 | 71.9 | 70.3 | 71.6 | 71.4 | --- |
| Diene rubber component 2-4 | phr | 16.8 | --- | --- | 28.1 | --- | --- | --- | --- |
| Diene rubber component 2-5 | phr | --- | 18.2 | --- | --- | 29.7 | --- | --- | --- |
| Diene rubber component 2-6 | phr | --- | --- | 17.8 | --- | --- | 28.4 | --- | --- |
| #1723 | phr | --- | --- | --- | --- | --- | --- | --- | 100 |
| TDAE | phr | --- | --- | --- | --- | --- | --- | 28.6 | --- |
| Compound MV ($ML_{1+4/100\ °C}$) | | 78 | 81 | 79 | 53 | 57 | 54 | 48 | 69 |
| Tensile strength ($T_B$) | MPa | 21.4 | 23.4 | 24.0 | 21.6 | 22.7 | 22.5 | 20.5 | 20.1 |
| Elongation at break ($E_B$) | % | 330 | 350 | 340 | 330 | 350 | 355 | 330 | 320 |
| Modulus ratio ($M_{300}/M_{100}$) | | 5.07 | 5.02 | 5.14 | 4.86 | 5.00 | 5.12 | 4.50 | 4.20 |
| Akron abrasion resistance | Index | 147 | 134 | 160 | 128 | 129 | 141 | 115 | 100 |
| Dynamic viscoelasticity test | | | | | | | | | |
| tan $\delta$ (0 °C) | Index | 142 | 137 | 144 | 157 | 148 | 160 | 126 | 100 |
| tan $\delta$ (60 °C) | Index | 127 | 130 | 132 | 110 | 118 | 116 | 105 | 100 |

## Claims

1. A diene rubber composition which is obtained by subjecting a diene rubber component 1, that is obtained by terminally modifying a conjugated diene polymer 1 with at least one silicon compound that is represented by formula (1) and/or formula (2), and a diene rubber component 2, that is obtained by terminally modifying a conjugated diene polymer 2 with at least one silicon compound that is represented by formula (1) and/or formula (2), to a hydrolysis process, and subsequently drying the resulting product,

   wherein the conjugated diene polymer 1 is obtained by polymerizing a conjugated diene compound and an aromatic vinyl compound, and has a peak molecular weight in terms of polystyrene of 400 k to 2,000 kg/mol, and wherein the conjugated diene polymer 2 is obtained by polymerizing a conjugated diene compound and an aromatic vinyl compound, and has a peak molecular weight in terms of polystyrene of 15 k to 60 kg/mol,

   $(X^1)_n(R^1O)_m\text{-Si-}(R^2)_{4-n-m}$ Formula (1)

   wherein $R^1$ and $R^2$ are each independently an alkyl group, an aromatic group, or an allyl group which has 1 to 12 carbon atoms, or an alkyl group, an aromatic group, or an allyl group which contains an oxygen atom and/or a nitrogen atom in the group, wherein $X^1$ is iodine, bromine, or chlorine, and each of n and m are 0, 1, 2, 3, or 4,

   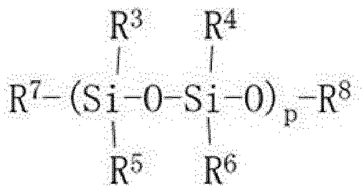

   Formula (2)

   wherein $R^3$ to $R^8$ are each independently an alkyl group, an aromatic group, or an allyl group which has 1 to 12 carbon atoms, or an alkyl group, an aromatic group, or an allyl group which contains an oxygen atom and/or a nitrogen atom in the group, and may also be a cyclic structure without $R^7$ and $R^8$, and p is a number between 1.5 and 1,000 in increments of 0.5.

2. The diene rubber composition according to claim 1, wherein 1, 2-structure or 3, 4-structure of the diene part in the diene rubber component 1 is 20 to 70 % and weight ratio of aromatic vinyl compound component in the diene rubber component 1 is 10 to 50 %, and wherein 1, 2-structure or 3, 4-structure of the diene part in the diene rubber component 2 is 40 to 80 % and weight ratio of aromatic vinyl compound component in the diene rubber component 2 is 5 to 35 %.

3. The diene rubber composition according to claim 1 or 2, wherein the ratio between the diene rubber component 1 and the diene rubber component 2 is 10 to 90 phr of the diene rubber component 2 for 100 phr of the diene rubber component 1.

4. A rubber compounded composition comprising at least 20 to 150 phr of silica for 100 phr of the total rubber component, wherein said 100 phr of the total rubber component contains at least 20 phr of the diene rubber composition according to claim 2 or 3.

5. A rubber compounded composition comprising at least 20 to 150 phr of silica and 5 to 30 phr of carbon black for 100 phr of an entire rubber component, wherein said 100 phr of the total rubber component contains at least 20 phr of the diene rubber composition according to claim 2 or 3.

6. A method for producing a diene rubber composition, comprising steps of:

   i) initiating polymerization of a conjugated diene compound and an aromatic vinyl compound in a hydrocarbon in the presence of an organolithium compound;
   ii) producing diene rubber component 1 by terminally modifying a conjugated diene polymer 1, which was polymerized in the step i) and has a peak molecular weight in terms of polystyrene of 400 k to 2,000 kg/mol, right after the polymerization with at least one silicon compound that is represented by formula (1) and/or formula (2);
   iii) producing diene rubber component 2 by terminally modifying a conjugated diene polymer 2, which was polymerized in the step i) and has a peak molecular weight in terms of polystyrene of 15 k to 60 kg/mol, right after

the polymerization with at least one silicon compound that is represented by formula (1) and/or formula (2); iv) subjecting the obtained diene rubber component 1 and diene rubber component 2 to a hydrolysis step, preferably steam coagulation, and subsequently drying the resulting product;

$$(X^1)_n(R^1O)_m\text{-Si-}(R^2)_{4-n-m} \qquad \text{Formula (1)}$$

wherein $R^1$ and $R^2$ are each an alkyl group, an aromatic group, or an allyl group which has 1 to 12 carbon atoms, or an alkyl group, an aromatic group, or an allyl group which containi an oxygen atom and/or a nitrogen atom in the group, wherein $X^1$ is a halogen atom of iodine, bromine, or chlorine, and each of n and m are 0, 1, 2, 3, or 4,

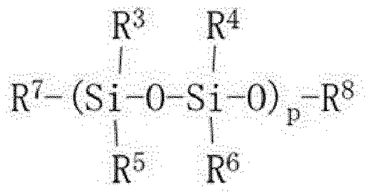

Formula (2)

wherein $R^3$ to $R^8$ are each independently an alkyl group, an aromatic group, or an allyl group which has 1 to 12 carbon atoms, or an alkyl group, an aromatic group, or an allyl group which contains an oxygen atom and/or a nitrogen atom in the group, and may also be a cyclic structure without $R^7$ and $R^8$, and p is a number between 1.5 and 1,000 in increments of 0.5.

**7.** The method according to claim 6, wherein polymerization of diene rubber component 1 alone or both diene rubber component 1 and diene rubber component 2 is initiated in the presence of an organolithium compound and a secondary amine compound.

**8.** The method according to claim 6 or 7, wherein, during polymerization of diene rubber component 1, after preliminarily polymerizing isoprene with an organolithium compound, conjugated diene compound other than isoprene and an aromatic vinyl compound are polymerized.

**9.** The method according to any one of claims 6 to 8, wherein, after polymerization of the diene rubber component 1, conjugated diene compound, aromatic vinyl compound, and optionally 1,2- or 3,4-structure modifiers of the diene part are added, and then polymerization is resumed in the presence of organic lithium compounds.

**10.** The method according to any one of claims 6 to 9, wherein after the step iii) and before the step iv), the steam coagulation/ drying of the step iv) are performed after addition of a halogenated silicon compound represented by formula (3) or an alkali metal compound represented by formula (4) in an amount satisfying the conditions of formula (5),

$$(R^9)_q\text{-}M^1\text{-}(X^2)_{4-q} \qquad \text{Formula (3)}$$

wherein $M^1$ is a silicon atom, $R^9$ is an alkyl group, aromatic group, or allyl group which has 1 to 12 carbons, $X^2$ is a halogen atom of iodine, bromine, or chlorine, and q is 0 or 1,

$$R^{10}\text{-}OM^2 \qquad \text{Formula (4)}$$

wherein $M^2$ is an alkali metal atom, preferably a lithium, sodium, or potassium atom, and $R^{10}$ is an alkyl group, aromatic group, allyl group, or acyl group which has 1 to 12 carbons,

$$1.5 \geqq [nX^1 + (4-q)X^2]/(L + M^2) \geqq 0.9 \qquad \text{Formula (5)}$$

wherein L is the number of moles of organolithium compound added at the initiation of polymerization, $M^2$ is the number of moles of alkali metal compound represented by formula (4), $X^1$ is the number of moles of silicon compound represented by formula (1), $X^2$ is the number of moles of halogenated silicon compound represented by formula (3), n is the same as n in the silicon compound represented by formula (1) and q is the same as q in the halogenated silicon compound represented by formula (3).

**11.** The method according to one of claims 6 to 10, wherein the ratio between the diene rubber component 1 and the diene rubber component 2 is 10 to 90 phr of the diene rubber component 2 for 100 phr of the diene rubber component 1.

## INTERNATIONAL SEARCH REPORT

International application No.
**PCT/JP2023/013302**

**A. CLASSIFICATION OF SUBJECT MATTER**

***C08G 81/02***(2006.01)i; ***C08F 8/42***(2006.01)i; ***C08K 3/04***(2006.01)i; ***C08K 3/36***(2006.01)i; ***C08L 15/00***(2006.01)i
FI: C08G81/02; C08L15/00; C08K3/36; C08K3/04; C08F8/42

According to International Patent Classification (IPC) or to both national classification and IPC

**B. FIELDS SEARCHED**

Minimum documentation searched (classification system followed by classification symbols)

C08G81/02; C08F8/42; C08K3/04; C08K3/36; C08L15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/085416 A1 (JSR CORP.) 30 April 2020 (2020-04-30) claims, paragraphs [0007], [0029], [0049]-[0050], [0069], [0099]-[0100], [0104], example 2 | 1-9, 11 |
| A | WO 2017/046963 A1 (ETIC INC.) 23 March 2017 (2017-03-23) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/013302**

| Patent document cited in search report | Publication date (day/month/year) | Patent family member(s) | Publication date (day/month/year) |
|---|---|---|---|
| WO 2020/085416 A1 | 30 April 2020 | US 2021/0371629 A1<br>claims, paragraphs [0007], [0044], [0067]-[0068], [0090], [0131]-[0132], [0136], example 2<br>EP 3871900 A1<br>KR 10-2021-0027417 A<br>CN 114269567 A<br>TW 202022035 A | |
| WO 2017/046963 A1 | 23 March 2017 | US 2018/0273650 A1<br>EP 3351569 A1<br>CN 108026205 A<br>KR 10-2018-0054673 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H574614 B
- JP 3290469 B
- JP 2018507303 A
- WO 201856025 A
- JP 6864078 B
- JP 6823708 B
- JP 6799666 B
- JP H05230290 A